# FASCICULE DE BREVET EUROPEEN

(11) **EP 3 012 010 B1**
(45) Date de publication et mention de la délivrance du brevet: **08.03.2017**
(21) Numéro de dépôt: 15190375.4
(22) Date de dépôt: 19.10.2015
(51) Int. Cl.: B01D 53/34, B01D 53/50, B01D 53/92, F01N 3/08

(54) **PROCÉDÉ ET INSTALLATION D'ÉPURATION DES GAZ D'ÉCHAPPEMENT D'UN MOTEUR D'UN NAVIRE MARIN**
VERFAHREN UND ANLAGE ZUR ABGASREINIGUNG EINES SCHIFFSMOTORS
METHOD AND PLANT FOR PURIFYING THE EXHAUST GASES OF AN ENGINE OF A MARINE VESSEL

(30) Priorité: 20.10.2014 FR 1460062
(43) Date de publication de la demande: 27.04.2016
(73) Titulaire: LAB SA, 69007 Lyon (FR)
(72) Inventeur: TABARIES, Frank, 83430 SAINT MANDRIER SUR MER (FR); SIRET, Bernard, 69200 VENISSIEUX (FR)
(74) Mandataire: Lavoix

(56) Documents cités:
- EP-A1- 2 738 364
- WO-A1-2011/073503
- WO-A1-2014/118819
- US-A1- 2010 206 171
- US-A1- 2014 231 361

## Description

La présente invention concerne un procédé d'épuration des gaz d'échappement d'un moteur d'un navire marin, ainsi qu'une installation de mise en oeuvre de ce procédé.

Les navires marins, que ce soient des paquebots ou d'autres navires, utilisent comme carburant pour leurs moteurs diesel surtout du fuel. Ce fuel contient jusqu'à 5% en masse de soufre, le plus souvent entre 0,5 et 3,5 % en masse. Lors du processus de combustion dans les moteurs, ce soufre est transformé en dioxyde de soufre (SO₂), qui est un gaz acide.

Les réglementations maritimes en vigueur obligent à limiter le rejet par la cheminée des navires à un équivalent de 0,5 % en masse de soufre dans le fuel alimentant les moteurs des navires. Toutefois, la valeur limite de rejet dépend de la zone de navigation : près des côtes ou bien au port, les émissions de dioxyde de soufre doivent être moindres qu'en pleine mer. Il faut noter que, même au port, un paquebot, par exemple de croisière, doit continuer à faire fonctionner ses moteurs pour subvenir aux besoins en électricité à bord et donc, potentiellement, émet du dioxyde de soufre.

Pour se conformer aux règlementations précitées, il est donc nécessaire que les navires marins emploient des moyens pour réduire leurs émissions de dioxyde de soufre. Plusieurs solutions sont envisageables.

On peut tout d'abord réduire la teneur en soufre du fuel utilisé, ce qui amène immédiatement une réduction des émissions de dioxyde de soufre. Toutefois, le fuel à très basse teneur en soufre est onéreux de sorte que cette approche n'est pas économiquement viable.

On peut utiliser un laveur humide avec un réactif de neutralisation comme la soude. Cependant les quantités de soude à prévoir sont importantes, puisque le flux de dioxyde de soufre peut atteindre 500 kg/h et par laveur pour les très gros paquebots. Outre le prix de la soude, il faut prévoir son stockage et prendre en considération son caractère très caustique, avec les risques sécuritaires que cela implique.

Enfin, des laveurs de désulfuration à l'eau de mer sont envisageables : cette technologie qui utilise l'alcalinité naturelle de l'eau de mer pour neutraliser le dioxyde de soufre, est connue et maîtrisée, tout particulièrement pour les centrales de production d'énergie situées en bord de mer. L'eau sortant de ces laveurs est acide et nécessite une post dilution, avec encore plus d'eau de mer que ce qui est nécessaire pour simplement capter le dioxyde de soufre. WO 2011/073503 en fournit un exemple. Ceci étant, la mise en oeuvre de cette technologie n'est a priori pas possible à bord d'un navire devant naviguer dans des eaux à la salinité et à l'alcalinité variables. De son côté, US 2010/0206171, qui peut être considéré comme l'état de la technique le plus proche de l'invention, divulgue un procédé d'épuration dans lequel les gaz d'échappement d'un moteur marin sont envoyés à un laveur de désulfuration à l'eau de mer dont les effluents sont envoyés pour oxydation et dilution à un dispositif alimenté en air et en eau de mer : ce document propose bien de piloter les deux débits d'eau de mer et le débit d'air correspondants, sans toutefois préciser les spécificités de ces pilotages. Dans tous les cas, d'une part, il faut prévoir de pomper des quantités d'eau importantes et variables, et ce sur des hauteurs importantes, ce qui induit une consommation d'énergie substantielle pour les pompes correspondantes. D'autre part, les eaux sortant du laveur étant acides et réductrices, leur rejet à la mer pose un problème de corrosion vis-à-vis des équipements, ainsi qu'un problème aval d'écotoxicité, du fait de leur DCO (demande chimique en oxygène) importante, et un problème aval d'acidification du fait que leur oxydation se poursuit dans la mer en transformant l'acide faible qu'est le dioxyde de soufre SO₂ capté ou son équivalent H₂SO₃, en acide fort qu'est l'acide sulfurique.

Le but de la présente invention est de proposer un procédé de désulfuration des émissions gazeuses des navires, qui, tout en conservant des performances de désulfuration acceptables, soit moins consommateur d'énergie et aboutisse à des effluents moins contraignants.

A cet effet, l'invention a pour objet un procédé d'épuration des gaz d'échappement d'un moteur d'un navire marin, tel que défini à la revendication 1.

Une des idées à la base de l'invention est de minimiser l'énergie nécessaire au pompage des premier et second flux d'eau de mer, en couplant l'un à l'autre la localisation du dispositif de post dilution bien plus basse que celle du laveur de désulfuration et le pilotage des débits de ces premier et second flux d'eau de mer en fonction des besoins réels, donnés respectivement par la mesure de la concentration en dioxyde de soufre dans les gaz épurés sortant du laveur et par la mesure du pH en sortie du dispositif de post dilution. En outre, l'utilisation d'un sel de fer conduit, à la fois, à diminuer la quantité nécessaire d'eau de mer apportée par le premier flux d'eau de mer, car le fer favorise le transfert gaz-liquide du dioxyde de soufre, par catalyse d'oxydation, et à diminuer le caractère réducteur des effluents du laveur et donc le caractère écotoxique et corrosif du rejet final à la mer.

Des caractéristiques additionnelles avantageuses du procédé conforme à l'invention sont spécifiées aux revendications 2 à 7.

L'invention a également pour objet une installation d'épuration des gaz d'échappement d'un moteur d'un navire marin, telle que définie à la revendication 8.

Des caractéristiques additionnelles avantageuses de cette installation sont spécifiées aux revendications 9 et 10.

L'invention sera mieux comprise à la lecture de la description qui va suivre, donnée uniquement à titre d'exemple et faite en se référant aux dessins sur lesquels :
- la figure 1 est un schéma d'une installation permettant de mettre en oeuvre un procédé conforme à l'invention ; et
- la figure 2 est un graphique de la cinétique d'oxydation du soufre en solution en fonction de la concentration en fer.

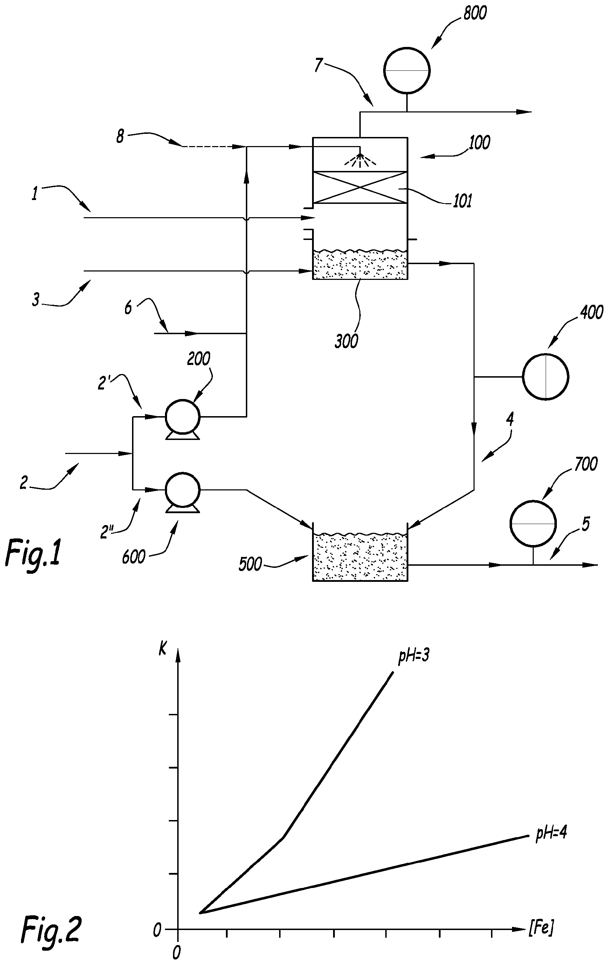

Sur la figure 1, un moteur, par exemple diesel, d'un bateau émet des gaz d'échappement 1 qui sont envoyés dans un laveur de désulfuration 100, c'est-à-dire un laveur conçu pour capter le dioxyde de soufre (SO₂) contenu dans les gaz d'échappement 1. Les gaz d'échappement 1 sont en général disponibles à une température comprise entre 220 et 350°C, cette température dépendant de chaudières et d'économiseurs pouvant récupérer de la chaleur en amont du laveur 100.

Le laveur 100 utilise de l'eau de mer aux fins de la capture du dioxyde de soufre, si bien qu'un débit d'eau de mer important doit y être pulvérisé. Le laveur 100 a aussi une fonction de quench, dans le sens où il refroidit les gaz jusqu'à la température d'équilibre avec l'eau, cette température d'équilibre étant comprise en général entre 20 et 40°C, sa valeur variant selon la température de l'eau de mer utilisée et selon la température des gaz, en particulier.

La partie 101 du laveur 100, active pour la capture du dioxyde de soufre, utilise une technologie connue en soi : cette partie active 101 comprend, entre autres, un garnissage ou des plateaux, et/ou des pulvérisateurs. Un flux 2' d'eau de mer, éventuellement diluée, est admis à la partie active 101 du laveur 100. L'alcalinité de l'eau de mer étant faible, en valant typiquement 1000 à 2500 µ équivalents d'alcalinité par litre, selon la localisation géographique, cela oblige à utiliser un débit important pour le flux d'eau de mer 2'. A titre d'ordre de grandeur, pour un débit valant 120 000 Nm³/h des gaz d'échappement 1 contenant 300 kg/h de SO₂, le débit pour le flux d'eau de mer 2' est de l'ordre de 1000 m³/h.

Pour des raisons d'implantation propres aux navires marins, le laveur 100 n'est pas placé en fond de cale, de sorte que le flux d'eau de mer 2' est à pomper par une pompe 200 qui doit relever l'eau de mer sur plusieurs dizaines de mètres et à travers des tuyauteries, ce qui génère ainsi une perte de charge substantielle et entraine un coût énergétique élevé. Comme expliqué par la suite, un des buts poursuivis par l'invention est de minimiser le débit du flux d'eau de mer 2', tout en conservant des performances de désulfuration acceptables.

Les effluents du laveur 100, c'est-à-dire les eaux ayant capté le dioxyde de soufre lors de leur passage dans la partie active 101 du laveur après avoir été distribuées au laveur, sont très acides, avec un pH normalement compris entre 2 et 4, le plus souvent compris entre 2 et 3, et ils sont fortement réducteurs.

Selon une des caractéristiques de l'invention, les effluents du laveur 100 sont collectés dans un dispositif d'oxydation 300 conçu pour promouvoir, en présence d'air, l'oxydation du soufre de l'état (+4) à l'état (+6), autrement dit conçu pour promouvoir, en présence d'oxygène, le passage des sulfites aux sulfates. A cette fin, le dispositif d'oxydation 300 est alimenté par un flux d'air 3 qui est admis, notamment injecté, directement dans les effluents du laveur collectés : les moyens correspondants du dispositif d'oxydation 300 sont connus en eux-mêmes et comprennent par exemple des rampes de distribution et/ou des injecteurs.

Dans l'exemple de réalisation considéré sur la figure 1, le dispositif d'oxydation 300 est intégré au fond du laveur 100, mais, à titre de variante non représentée, fonctionnellement similaire, ce dispositif d'oxydation peut être déporté voire séparé du laveur 100, sous forme d'un bac annexe.

Quelle que soit sa forme de réalisation, on comprend que le dispositif d'oxydation 300 permet de corriger le caractère réducteur des effluents du laveur 100.

Selon une autre caractéristique de l'invention, un flux 6 d'un sel de fer, de préférence du chlorure ferrique, est admis au dispositif d'oxydation 300, de façon à accélérer et à faciliter l'oxydation des effluents du laveur 100. En effet, il est connu que le fer, ainsi d'ailleurs que d'autres métaux, à des concentrations comprises entre 1 et 10 µmoles/l, a un effet considérable sur la cinétique d'oxydation des sulfites. A titre d'exemple, la figure 2, établie à partir des résultats de travaux de recherche remontant à 1977 (S Fuzzi), montre l'effet important du fer sur l'oxydation du soufre en solution, l'axe des abscisses de la figure 2 correspondant à la concentration de fer en solution, tandis que l'axe des ordonnées correspond à la constante de la cinétique de second ordre K d'oxydation du soufre en solution : l'effet dépend du pH, comme illustré par les deux courbes de la figure 2 qui correspondent à des valeurs respectives de pH de 3 et 4.

Dans l'exemple de réalisation considéré sur la figure 1, le flux 6 du sel de fer est mélangé au flux d'eau de mer 2'. Ceci étant, on comprend que l'endroit exact de l'injection du flux de sel de fer 6 est sans importance du moment que le sel de fer se retrouve, d'une manière ou d'une autre, dans les effluents collectés dans le dispositif d'oxydation 300.

Selon une caractéristique de l'invention, le débit du flux d'air 3 et/ou le débit du flux de sel de fer 6 sont pilotés, le cas échéant par des moyens ad hoc, à partir de la mesure du potentiel redox, couramment appelé ORP, des effluents oxydés par le dispositif d'oxydation 300 : à cet effet, on utilise une sonde 400 qui mesure en permanence ce potentiel redox. En pratique, la sone 400 est placée en sortie du dispositif d'oxydation 300, étant entendu que ce déplacement « en sortie » correspond aussi bien à l'agencement de la sonde 400 au niveau d'une conduite canalisant le flux 4 sortant à l'extérieur du dispositif d'oxydation 300, qu'à l'utilisation de cette sonde dans une zone du dispositif d'oxydation, dans laquelle l'oxydation des effluents est sensiblement terminée.

Avantageusement, pour les raisons évoquées plus haut, le débit du flux de sel de fer 6 est piloté de manière que la concentration en fer dans les effluents collectés dans le dispositif d'oxydation 300 soit maintenue entre 1 et 10 µmoles/l.

Grâce à l'oxydation des effluents du laveur, réalisée par le dispositif d'oxydation 300 alimenté par le flux d'air 3 et démultipliée par le flux de sel de fer 6, le flux 4 sortant du dispositif 300 est à la fois moins nocif pour l'environnement et moins agressif pour les équipements, du fait qu'il contient des sulfates oxydés au lieu de sulfites non oxydés.

Par ailleurs, selon une autre caractéristique de l'invention, l'acidité du flux 4 sortant du dispositif d'oxydation est traitée en vue de pouvoir être rejeté à la mer. Pour ce faire, on réalise une post dilution de ce flux 4 avec un flux d'eau de mer 2", l'alcalinité apportée par cette dernière permettant de relever le pH, notamment pour respecter les contraintes de pH dans la trainée du navire. Conformément à l'invention, afin de minimiser l'énergie totale requise, cette post dilution est réalisée dans un dispositif ad hoc 500, qui est par exemple un bac de dilution ou un mélangeur statique et qui reçoit le flux d'eau de mer 2", distinct du flux d'eau de mer 2' et entrainé par une pompe propre 600. En sortie du dispositif de post dilution 500 est formé un flux de rejet final 5, évacué hors du bateau, en étant déversé à la mer.

Un pH-mètre 700 est utilisé pour apprécier l'effet sur le pH par le dispositif de post dilution 500, de manière que la mesure qu'il fournit en permanence est utilisée pour piloter, le cas échéant par des moyens ad hoc, le débit du flux d'eau de mer 2". En pratique, le pH-mètre 700 est placé en sortie du dispositif de post dilution 500, étant entendu que ce placement « en sortie » correspond aussi bien à l'agencement du pH-mètre 700 au niveau d'une conduite canalisant le flux de rejet 5 en dehors du dispositif de post dilution 500, qu'à l'utilisation de ce pH-mètre dans une zone du dispositif de post dilution, dans laquelle le mélange des flux 2" et 4 est sensiblement homogénéisé.

Il y a lieu de bien comprendre que, en utilisant aucun agent neutralisant alcalin autre que l'eau de mer, le débit du flux total d'eau de mer 2, correspondant au cumul des flux d'eau de mer 2' et 2", est donné pour respecter les contraintes en matière de pH dans le flux de rejet final 5. Suivant une caractéristique importante de l'invention, le dispositif de post dilution 500 est situé au moins dix mètres en dessous du laveur 100. Plus précisément, l'écartement d'au moins 10 mètres entre ces deux équipements est à considérer entre le niveau du fond du dispositif de post dilution 500 et le niveau du fond du laveur 100. En localisant le dispositif de post dilution 500 bien en dessous du laveur 100, on réalise une économie importante pour l'énergie nécessaire au fonctionnement des pompes 200 et 600.

De plus, le rendement d'épuration, défini par l'équation (1-cs/ci) où cs et ci sont les concentrations en dioxyde de soufre dans, respectivement, le flux des gaz épurés 7 et les gaz d'échappement 1, est directement impacté par le rapport liquide/gaz des débits massiques du flux d'eau de mer 2' et du flux d'air 3, ce rendement étant aussi impacté par d'autres facteurs comme le pH et la température. Selon une des caractéristiques de l'invention, un analyseur 800 de dioxyde de soufre, situé en sortie du laveur 100, mesure en permanence la concentration en dioxyde de soufre dans les gaz épurés 7, cette mesure étant utilisée pour piloter, le cas échéant par des moyens ad hoc, le débit du flux d'eau de mer 2'. Ainsi, on comprend qu'en permanence, la part du flux d'eau de mer 2', sur le flux total d'eau de mer 2 est minimisée, tandis que le reste du flux total 2, c'est-à-dire le flux d'eau de mer 2", est envoyé par la pompe 600 au dispositif de post dilution 500, bien plus bas en élévation que le laveur 100, et donc avec moins d'énergie.

Par ailleurs, il faut noter que lorsque le flux de sel de fer 6 est envoyé au laveur 100, l'introduction du fer « tire » le dioxyde de soufre vers le liquide, puisque le dioxyde de soufre n'a qu'une solubilité limitée dans l'eau, à la différence de l'acide sulfurique, produit de l'oxydation, qui est pratiquement infiniment soluble. On comprend que la présence du sel de fer amené par le flux 6 permet donc de diminuer encore le débit d'eau de mer 2'.

L'invention assure ainsi les avantages suivants :
- le pilotage des débits des flux de mer 2 et 2" en fonction des besoins réels, qui sont connus par les mesures fournies par l'analyseur 800 et le pH-mètre 700, pilotage couplé à la localisation du dispositif de post dilution 500 à une élévation bien moindre que le laveur 100, conserve à un strict minimum l'énergie totale dépensée pour pomper les flux de mer 2' et 2" ;
- grâce à l'utilisation de fer, qui accélère l'oxydation et diminue le caractère réducteur des effluents du laveur 100 et donc du rejet final 5, on diminue le caractère écotoxique vis-à-vis de l'environnement et corrosif vis-à-vis des équipements ; et
- l'utilisation de fer améliore également le transfert gaz-liquide du dioxyde de soufre dans les effluents du laveur 100, par catalyse d'oxydation, et diminue encore le débit nécessaire pour le flux d'eau de mer 2'.

A titre optionnel, l'installation de désulfuration est avantageusement complétée par un moyen d'introduction d'un agent alcalin dans l'alimentation du laveur 100, comme indiqué par un flux 8 en pointillés sur la figure 1. Cet agent alcalin est par exemple de la magnésie Mg(OH)₂ ou de la soude NaOH. Lorsque le bateau est en pleine mer ou, plus généralement, lorsqu'aucune limitation n'affecte les valeurs de débit des flux d'eau de mer 2' et 2", pilotées à partir des mesures par l'analyseur 800 et par le pH-mètre 700,l'alcalinité apportée par le flux d'agent alcalin 8 est marginale par rapport à celle apportée par le flux d'eau de mer 2' : autrement dit, dans ces cas là, l'invention correspond à une désulfuration essentiellement voire exclusivement à l'eau de mer. Ceci étant, dans certaines situations, par exemple lorsque le bateau est dans un port ou, plus généralement, lorsque le débit cumulé des flux d'eau de mer 2' et 2" est limité en deçà de la valeur de débit pilotée à partir des mesures de l'analyseur 800 et du pH neutre 700, l'alcalinité apportée par le flux d'agent alcalin 8 devient prépondérante par rapport à l'alcalinité apportée par le flux d'eau de mer 2', cette dernière pouvant être marginale : dans ces cas là, le débit du flux d'agent alcalin 8 est piloté, le cas échéant par des moyens ad hoc, à partir des mesures fournies, à la fois, par l'analyseur 800 et par le pH-mètre 700.

En pratique, on comprend que l'endroit exact du point d'injection du flux d'agent alcalin 8 est sans importance du moment que l'agent alcalin se retrouve, d'une manière ou d'une autre, dans le liquide de lavage utilisé dans le laveur 100 : ainsi, le flux d'agent alcalin 8 peut être introduit directement dans le laveur 100 ou dans les circuits d'alimentation de ce dernier.

On notera que les divers moyens de pilotage évoqués jusqu'ici ne sont pas représentés sur la figure 1 et comprennent par exemple un régulateur, un calculateur, un système automatisé et/ou une unité de contrôle informatique, etc.

## Revendications

1. Procédé d'épuration des gaz d'échappement d'un moteur d'un navire marin, dans lequel :
- les gaz d'échappement (1) sont envoyés à un laveur de désulfuration (100), auquel est admis un premier flux d'eau de mer (2'),
- la concentration en dioxyde de soufre est mesurée en permanence dans les gaz (7) épurés par le laveur (100), le débit du premier flux d'eau de mer (2') étant piloté à partir de cette mesure de la concentration en dioxyde de soufre,
- les effluents du laveur (100) sont collectés dans un dispositif d'oxydation (300), auquel est admis un flux d'air (3) et auquel est envoyé, directement ou via le laveur (100), un flux de sel de fer (6),
- le potentiel redox est mesuré en permanence en sortie du dispositif d'oxydation (300), le débit du flux d'air (3) et/ou le débit du flux de sel de fer (6) étant pilotés à partir de cette mesure du potentiel redox,
- le flux (4) sortant du dispositif d'oxydation (300) est envoyé à un dispositif de post dilution (500), qui est situé au moins dix mètres plus bas que le laveur (100) et auquel est admis un second flux d'eau de mer (2"), et
- le pH est mesuré en permanence en sortie du dispositif de post dilution (500), le débit du second flux d'eau de mer (2") étant piloté à partir de cette mesure du pH.

2. Procédé selon la revendication 1, dans lequel la concentration en fer dans les effluents du laveur (100) est maintenue entre 1 et 10 µmoles/l.

3. Procédé selon l'une des revendications 1 ou 2, dans lequel le flux de sel de fer (6) est mélangé au premier flux d'eau de mer (2').

4. Procédé selon l'une quelconque des revendications 1 à 3, dans lequel le sel de fer est du chlorure ferrique.

5. Procédé selon l'une quelconque des revendications 1 à 4, dans lequel un flux d'agent alcalin (8) est admis au laveur (100).

6. Procédé selon la revendication 5, dans lequel, lorsque le débit cumulé des premier et second flux d'eau de mer (2', 2") est limité en deçà de la valeur pilotée à partir de la mesure de la concentration en dioxyde de soufre et de la mesure du pH, le débit du flux d'agent alcalin (8) est piloté à partir de la mesure de la concentration en dioxyde de soufre et à partir de la mesure du pH.

7. Procédé selon l'une des revendications 5 ou 6, dans lequel l'agent alcalin est de la magnésie Mg(OH)₂.

8. Installation d'épuration des gaz d'échappement d'un moteur d'un navire marin, laquelle installation comprend :
- un laveur de désulfuration (100), qui est adapté pour recevoir les gaz d'échappement (1) et qui est adapté pour être alimenté avec un premier flux d'eau de mer (2'),
- des premiers moyens de mesure (800) adaptés pour mesurer en permanence la concentration en dioxyde de soufre dans les gaz (7) épurés par le laveur (100),
- des premiers moyens de pilotage adaptés pour piloter le débit du premier flux d'eau de mer (2') à partir de la mesure fournie par les premiers moyens de mesure,
- un dispositif d'oxydation (300), qui est adapté pour collecter les effluents du laveur (100), qui est adapté pour être alimenté avec un flux d'air (3) et qui est adapté pour recevoir, directement ou via le laveur (100), un flux de sel de fer (6),
- des deuxièmes moyens de mesure (400) adaptés pour mesurer en permanence le potentiel redox en sortie du dispositif d'oxydation (300),
- des seconds moyens de pilotage adaptés pour piloter le débit du flux d'air (3) et/ou le débit du flux de sel de fer (6) à partir de la mesure fournie par les deuxièmes moyens de mesure,
- un dispositif de post dilution (500), qui est adapté pour recevoir le flux (4) sortant du dispositif d'oxydation (300), qui est situé au moins dix mètres plus bas que le laveur (100) et qui est adapté pour être alimenté avec un second flux d'eau de mer (2"),
- des troisièmes moyens de mesure (700) adaptés pour mesurer en permanence le pH en sortie du dispositif de post dilution (500), et
- des troisième moyens de pilotage adaptés pour piloter le débit du second flux d'eau de mer (2") à partir de la mesure fournie par les troisièmes moyens de mesure.

9. Installation suivant la revendication 8, dans laquelle le dispositif d'oxydation (3) est intégré au fond du laveur de désulfuration (100).

10. Installation suivant l'une des revendications 8 ou 9, laquelle installation comprend en outre un moyen (8) d'admission d'un agent alcalin au laveur de désulfuration (100).

## Patentansprüche

1. Verfahren zum Reinigen von Abgasen eines Motors eines Schiffes, bei dem:
- die Abgase (1) in einen Entschwefelungswäscher (100) geleitet werden, dem ein erster Meerwasserstrom (2') zugeführt wird,
- die Konzentration an Schwefeldioxid in den von dem Wäscher (100) gereinigten Gasen (7) ständig gemessen wird, wobei der Durchfluss des ersten Meerwasserstroms (2') auf der Grundlage dieser Messung der Schwefeldioxidkonzentration gesteuert wird,
- die Abwässer des Wäschers (100) in einer Oxidationsvorrichtung (300) gesammelt werden, der ein Luftstrom (3) zugeführt wird und der direkt oder über den Wäscher (100) ein Eisensalzstrom (6) zugeführt wird,
- das Redoxpotential am Ausgang der Oxidationsvorrichtung (300) ständig gemessen wird, wobei der Durchsatz des Luftstroms (3) und/oder der Durchsatz des Eisensalzstroms (6) aus der Messung des Redoxpotentials gesteuert wird,
- der Strom (4), der die Oxidationsvorrichtung (300) verlässt, an eine Vorrichtung (500) zur Nachverwässerung geleitet wird, die mindestens zehn Meter tiefer als der Wäscher (100) liegt und der ein zweiter Meerwasserstrom (2") zugeführt wird, und
- der pH-Wert am Ausgang der Vorrichtung (500) zur Nachverwässerung ständig gemessen wird, wobei der Durchsatz des zweiten Meerwasserstroms (2") auf der Grundlage dieser pH-Wert-Messung gesteuert wird.

2. Verfahren nach Anspruch 1, bei dem die Eisenkonzentration der Abwässer des Wäschers (100) zwischen 1 und 10 µmol/l gehalten wird.

3. Verfahren nach einem der Ansprüche 1 oder 2, bei dem der Eisensalzstrom (6) mit dem ersten Meerwasserstrom (2') gemischt wird.

4. Verfahren nach einem beliebigen der Ansprüche 1 bis 3, bei dem das Eisensalz Eisenchlorid ist.

5. Verfahren nach einem beliebigen der Ansprüche 1 bis 4, bei dem dem Wäscher (100) ein Strom eines alkalischen Mittels (8) zugeführt wird.

6. Verfahren nach Anspruch 5, bei dem, wenn der kumulierte Durchsatz des ersten und zweiten Meerwasserstroms (2', 2") unterhalb des Steuerwerts auf der Grundlage der Messung der Konzentration an Schwefeldioxid und der Messung des pH-Wertes eingeschränkt ist, der Durchsatz des Stroms an alkalischen Mitteln auf der Grundlage der Messung der Schwefeldioxidkonzentration und auf der Grundlage der Messung des pH-Wertes gesteuert wird.

7. Verfahren nach einem der Ansprüche 5 oder 6, bei dem das alkalische Mittel Magnesiumhydroxid, Mg(OH)₂, ist.

8. Reinigungsanlage für Abgase eines Motors eines Schiffes, die umfasst:
- einen Entschwefelungswäscher (100), der geeignet ist, Abgase (1) zu empfangen, und der geeignet ist, mit einem ersten Meerwasserstrom (2') versorgt zu werden,
- erste Messmittel (800), die geeignet sind, die Schwefeldioxidkonzentration in den von dem Wäscher (100) gereinigten Gasen (7) ständig zu messen,
- erste Steuermittel, die geeignet sind, den Durchsatz des ersten Meerwasserstroms (2') auf der Grundlage der Messung, die von den ersten Messmitteln geliefert wird, zu steuern,
- eine Oxidationsvorrichtung (300), die geeignet ist, die Abwässer des Wäschers (100) zu sammeln, die geeignet ist, mit einem Luftstrom (3) versorgt zu werden und die geeignet ist, direkt oder über den Wäscher (10) einen Eisensalzstrom (6) zu empfangen,
- zweite Messmittel (400), die geeignet sind, ständig das Redoxpotential am Ausgang der Oxidationsvorrichtung (300) zu messen,
- zweite Steuermittel, die geeignet sind, den Durchsatz des Luftstroms (3) und/oder den Durchsatz des Eisensalzstroms (6) aus der Messung, die von den zweiten Messmitteln geliefert wird, zu steuern,
- eine Vorrichtung(500) zur Nachverwässerung, die geeignet ist, den aus der Oxidationsvorrichtung (300) austretenden Strom zu empfangen, die mindestens zehn Meter tiefer als der Wäscher (100) angeordnet ist und die geeignet ist, mit einem zweiten Meerwasserstrom (2") versorgt zu werden,
- dritte Messmittel (700), die geeignet sind, ständig den pH-Wert am Ausgang der Vorrichtung (500) zur Nachverwässerung zu messen, und
- dritte Steuermittel, die geeignet sind, den Durchsatz des zweiten Meerwasserstroms (2") auf der Grundlage der Messung, die von den dritten Messmitteln geliefert wird, zu steuern.

9. Anlage nach Anspruch 8, bei der die Oxidationsvorrichtung (3) in den Boden des Entschwefelungswäschers (100) integriert ist.

10. Anlage nach einem der Ansprüche 8 oder 9, die außerdem ein Mittel (8) zum Zuführen eines alkalischen Mittels zum Entschwefelungswäscher (100) umfasst.

## Claims

1. A method for scrubbing exhaust gases from an engine of a marine vessel, wherein:
- the exhaust gases (1) are sent to a desulfurization scrubber (100), to which a first seawater flow (2') is admitted,
- the sulfur dioxide concentration is permanently measured in the gases (7) purified by the scrubber (100), the flow rate of the first seawater flow (2') being controlled from this measurement of the sulfur dioxide concentration,
- the effluents of the scrubber (100) are collected in an oxidation device (300), to which an airflow (3) is admitted and to which an iron salt flow (6) is directly admitted or via the scrubber (100),
- the redox potential is permanently measured at the outlet of the oxidation device (300), the airflow rate (3) and/or the flow rate of the iron salt flow (6) being controlled from this measurement of the redox potential,
- the flow (4) leaving the oxidation device (300) is sent to a post-dilution device (500), which is located at least ten meters lower than the scrubber (100) and to which a second seawater flow (2") is admitted, and
- the pH is permanently measured at the outlet of the post-dilution device (500), the flow rate of the second seawater flow (2") being controlled from this measurement of the pH.

2. The method according to claim 1, wherein the iron concentration in the effluents of the scrubber (100) is maintained between 1 and 10 µmoles/L.

3. The method according to one of claims 1 or 2, wherein the iron salt flow (6) is mixed with the first seawater flow (2').

4. The method according to any of claims 1 to 3, wherein the iron salt is ferric chloride.

5. The method according to any of claims 1 to 4, wherein an alkaline agent flow (8) is admitted to the scrubber (100).

6. The method according to claim 5, wherein, when the accumulated flow rate of the first and second seawater flows (2', 2") is limited to below the controlled value from the measurement of the sulfur dioxide concentration and from the measurement of the pH, the flow rate of the alkaline agent flow (8) is controlled from the measurement of the sulfur dioxide concentration and from the measurement of the pH.

7. The method according to one of claims 5 or 6, wherein the alkaline agent is a magnesia Mg(OH)₂.

8. An installation for scrubbing exhaust gases from an engine of a marine vessel, which installation comprises:
- a desulfurization scrubber (100), which is adapted for receiving the exhaust gases (1) and which is adapted for being supplied with a first seawater flow (2'),
- first measurement means (800) adapted for permanently measuring the sulfur dioxide concentration in the gases (7) purified by the scrubber (100),
- first control means adapted for controlling the flow rate of the first seawater flow (2') from the measurement provided by the first measurement means,
- an oxidation device (300), which is adapted for connecting the effluents of the scrubber (100), which is adapted for being supplied with an airflow (3) and which is adapted for directly receiving or via the scrubber (100), an iron salt flow (6),
- second measurement means (400) adapted for permanently measuring the redox potential at the outlet of the oxidation device (300),
- second control means adapted for controlling the airflow rate (3) and/or the flow rate of the iron salt flow (6) from the measurement provided by the second measurement means,
- a post-dilution device (500), which is adapted for receiving the flow (4) leaving the oxidation device (300), which is located at least ten meters lower than the scrubber (100) and which is adapted for being supplied with a second seawater flow (2"),
- third measurement means (700) adapted for permanently measuring the pH at the outlet of the post-dilution device (500), and
- third control means adapted for controlling the flow rate of the second seawater flow (2") from the measurement provided by the third measurement means.

9. The installation according to claim 8, wherein the oxidation device (3) is integrated to the bottom of the desulfurization scrubber (100).

10. The installation according to one of claims 8 or 9, which installation further comprises a means (8) for admitting an alkaline agent to the desulfurization scrubber (100).
